# EUROPEAN PATENT SPECIFICATION

(11) **EP 3 093 239 B1**
(45) Date of publication and mention of the grant of the patent: **08.05.2019**
(21) Application number: 16159247.2
(22) Date of filing: 08.03.2016
(51) Int. Cl.: B64C 39/00

(54) **IMPACT ABSORPTION APPARATUS FOR UNMANNED AERIAL VEHICLE**
STOSSDÄMPFENDE VORRICHTUNG FÜR EIN UNBEMANNTES LUFTFAHRZEUG
APPAREIL D'ABSORPTION D'IMPACT POUR VÉHICULE AÉRIEN SANS PILOTE

(30) Priority: 15.05.2015 US 201514713343
(43) Date of publication of application: 16.11.2016
(73) Proprietor: Disney Enterprises, Inc., Burbank, CA 91521 (US)
(72) Inventor: WONG, Clifford, Burbank CA 91521 (US)
(74) Representative: Franks & Co Limited

(56) References cited:
- WO-A1-2014/080409
- US-A1- 2006 006 281
- US-A1- 2013 134 254
- US-B1- 8 979 023

## Description

### BACKGROUND

### 1. Field

This disclosure generally relates to the field of aerial vehicles. More particularly, the disclosure relates to safety mechanisms for aerial vehicles.

### 2. General Background

Unmanned aerial vehicles ("UAVs") such as flying robots, drones, airplanes, helicopters, multicopters, e.g., flying robots that operate in a manner similar to helicopters with multiple propellers, balloons, etc. have become more commonplace in entertainment environments such as theme parks, film sets, sports environments, and news environments. A pilot can wirelessly navigate the UAV from a remote location. Alternatively, the UAV may have an autopilot feature so that it is operated and navigated by a computing device. A human is not present on the UAV during flight of the UAV. UAVs have been used for providing entertainment, aerial cinematography, gathering video, images, and/or audio, etc.

As UAVs increasingly fly over locations where people are present, safety for those people is an important goal. Equipment malfunction, aerial hazards, and aerial maneuvers are examples of events which may result in a loss of propulsion.

A previous solution was to attach a parachute to the UAV. The parachute could be ejected via a wireless instruction sent by a pilot or a computing device that operated the UAV or by on-board monitoring systems. A problem with using a parachute is that the parachute can get tangled with propulsion units of the UAV during or after ejection of the parachute. Typical UAVs, e.g. multicopters, are devices that are naturally unstable, hence malfunctions can result in a tumbling vehicle. For example, a multicopter can flip during ejection of the parachute. The parachute could then get entangled with the propulsion units of the multicopter during the flip and not eject properly or not provide much help in decelerating the multicopter if the parachute is ejected. Further, a parachute is often fabricated from a heavy material that significantly slows normal movement. Moreover, a parachute requires a fall distance to deploy and properly decelerate a vehicle. Therefore, a parachute is less effective at low altitude. As a result, a continuing need exists for robust UAV safety systems that do not impede normal operation and that perform well at low altitudes.

Another solution was the establishment of a geofence. The geofence allows the UAV to fly within a perimeter, e.g., a safe distance away from people or objects. Geofencing restricts the use and benefits of a UAV. Since a geofence is a control system rather than a physical barrier, the UAV can still fly through the geofence as a result of hardware or logic failure. Further approaches to enhancing safety of aerial vehicles are known. Thus, for example, US 8 979 023 B1 (Wang Mingyu [CN]) discloses an impact protection apparatus that comprises a gas container and an inflatable member to function as an airbag of a movable object such as an aerial vehicle wherein the airbag is configured to be deployed such that it does not interfere with the operation of the one or more propulsion units of the vehicle. Another example is that of US patent application, publication no. US 2013/0134254 A1 (Moore Jason [US]), which discloses an unmanned aerial vehicle (UAV) specifically designed to extinguish fires from the air whilst tethered and which may merely be configured to operate with a conventional airbag system.

There is a continuous need to improve safety performance of UAVs.

### SUMMARY

According to a first aspect described herein, there is provided an unmanned aerial vehicle according to claim 1.

The inflation device may comprise a canister of carbon dioxide having an electromechanical activator.

The one or more airbags may have inflated dimensions such that the frame and the propulsion mechanism are covered after inflation of the one or more airbags.

The unmanned aerial vehicle may further comprise a sensor that detects a component malfunction and sends the activation signal to the inflation device upon the detection of the component malfunction.

The unmanned aerial vehicle may further comprise an altimeter producing an altitude signal and a processor coupled to receive the altitude signal. The processor may execute code configured to determine whether the frame experiences a change in altitude. The processor sends the activation signal to the inflation device upon the processor determining that the frame is flying outside of a predetermined altitude range.

The unmanned aerial vehicle may further comprise an accelerometer producing an acceleration signal or loss of signal and a processor coupled to receive the acceleration signal. The processor may execute code configured to determine whether the frame experiences a change in acceleration. The processor may send the activation signal to the inflation device upon the processor determining that the frame is accelerating at an acceleration in excess of a predetermined acceleration.

The unmanned aerial vehicle may further comprise a receiver that receives an instruction from a pilot remotely positioned from the unmanned aerial vehicle and sends the activation signal to the inflation device based upon the instruction.

The one or more airbags may be positioned above and below a center of gravity of the frame along the vertical centerline of the frame.

The one or more airbags may be sealed to prevent air from the one or more airbags being dissipated upon the impact.

The one or more airbags may have one or more vents that allow air from the one or more airbags to be dissipated upon the impact.

According to a second aspect described herein, there is provided a method according to claim 11.

The method may further comprise detecting a condition of a component and sending the activation signal to the inflation device upon the detection of the condition of the component.

The method may further comprise determining if the unmanned aerial vehicle experiences a change in altitude and sending the activation signal to the inflation device upon determining that the unmanned aerial vehicle is flying beneath a predetermined altitude.

The method may further comprise determining if the frame experiences a change in acceleration and sending the activation signal to the inflation device upon determining that the unmanned aerial vehicle is accelerating at an acceleration in excess of a predetermined acceleration.

The method may further comprise receiving an instruction from a pilot remotely positioned from the unmanned aerial vehicle apparatus and sending the activation signal to the inflation device based upon the instruction.

According to a third aspect described herein, there is provided a system comprising a sensor that determines a condition of a component of an unmanned aerial vehicle. The unmanned aerial vehicle has a storage device that stores one or more airbags and an inflation device and a processor that receives a malfunction signal from the sensor indicative of the condition of the component and sends an activation signal to the inflation device to deploy the one or more airbags from the storage device prior to an impact of the unmanned aerial vehicle with an object.

The sensor may include an altimeter.

The sensor may include an accelerometer.

The inflation device may be a canister of carbon dioxide having an electromechanical activator.

The one or more airbags may have dimensions such that the frame and the propulsion mechanism are covered after inflation of the one or more airbags.

According to a fourth aspect described herein, there is provided an unmanned aerial vehicle apparatus which comprises a frame and a propulsion mechanism coupled to the frame that propels the frame through the air. A storage device stores one or more airbags and is coupled to the frame. An inflation device coupled to the frame receives an activation signal and in response inflates the one or more airbags prior to an impact of the frame with an object.

According to a fifth aspect described herein, there is provided a method comprising propelling an unmanned aerial vehicle through the air. An activation signal is sent to an inflation device that inflates one or more airbags coupled to the aerial vehicle to deploy the one or more airbags from the storage device.

According to a sixth aspect described herein, there is provided a system comprising a sensor that determines a condition of a component of an unmanned aerial vehicle. The unmanned aerial vehicle has one or more airbags and an inflation device. Further, the system comprises a processor that receives a signal from the sensor indicative of the condition of the component and sends an activation signal to the inflation device to deploy the one or more airbags from the storage device prior to an impact of the unmanned aerial vehicle with an object.

### BRIEF DESCRIPTION OF THE DRAWINGS

The above-mentioned features of the present disclosure will become more apparent with reference to the following description taken in conjunction with the accompanying drawings wherein like reference numerals denote like elements and in which:
Figure 1 illustrates a UAV system.
Figures 2A, 2B, and 2C illustrate a front view, a side view, and a perspective view of the components of the UAV apparatus illustrated in Figure 1.
Figures 3A and 3B illustrate an example of the UAV apparatus illustrated in Figures 2A, 2B, and 2C partially deploying and fully deploying a first airbag and a second airbag.
Figure 4 illustrates the internal electronic components of the electronic control device illustrated in Figures 2A, 2B, and 2C.

### DETAILED DESCRIPTION

A UAV comprising an impact absorption device is provided to improve safety in close proximity to a flying UAV. The impact absorption device is inflated by the UAV after detection of a condition that may lead to a ground impact, but prior to that impact. The inflated impact absorption device covers the hard, sharp, and spinning parts of the UAV, e.g., the propellers, the frame, etc. As a result, any impact of the UAV is with an inflated object rather than a hard or spinning UAV component. The impact absorption device is configured to prioritize reducing the effect of impact as opposed to preventing damage to the UAV.

As an example, the impact absorption device comprises one or more airbags that are each activated by one or more components of the UAV after the UAV detects a condition warranting activation. Such conditions include power failure, motor failure, guidance system failure, unexpected change in control source, navigation failure, air pressure change, change in acceleration or speed, mid-air collision with an obstacle and the like. For instance, a first airbag is positioned above the center of gravity of the UAV whereas a second airbag is positioned below the center of gravity of the UAV. Each airbag has dimensions such that both in total engulf the entire frame structure and propulsion mechanism, e.g., propellers, of the UAV. In contrast with previous approaches, e.g., the parachute configuration, that allowed different components of the UAV to be exposed after the safety mechanism was activated, the UAV uses the impact absorption device to engulf the hard, sharp and spinning components of the UAV to reduce the effect of impact.

The impact absorption device also helps slow the acceleration of the UAV during free fall. For instance, the UAV engulfed in two airbags will have significantly greater air resistance and so fall at a much slower velocity and acceleration than the UAV without two airbags. The resulting slower descent lowers the force of impact arising from contact with objects or the ground.

The impact absorption device is configured to lessen effects on flight performance in contrast with previous approaches, e.g., the parachute configuration, that used heavy materials that affected flight performance of a UAV. For example, each airbag can weigh less than one hundred grams. The airbag can be fabricated from an ultra lightweight film rather than a durable and puncture-proof material commonly used for parachutes. Therefore, the UAV can fly at similar speeds and perform similar maneuvers with the impact absorption device as if the UAV did not have the impact absorption device.

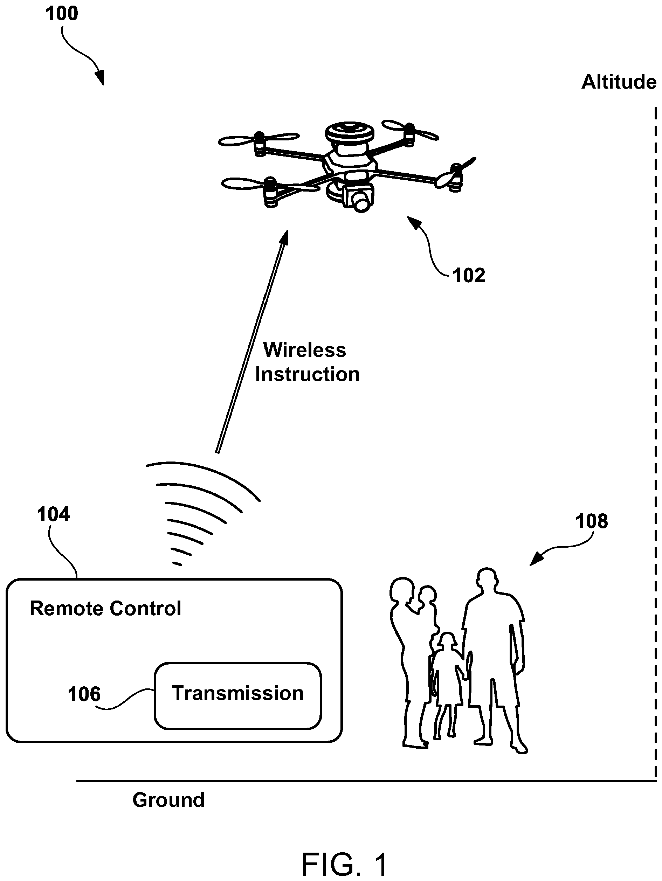

Figure 1 illustrates a UAV system 100. The UAV system 100 comprises a UAV 102, e.g., a flying robot, drone, unmanned airplane, unmanned helicopter, unmanned multicopter, unmanned balloon, and a remote control 104 having a transmitter 106. The UAV 102 flies autonomously or with remote human navigation above one or more people 108 and/or a plurality of objects (not shown). The remote control 104 is a wireless device that radiates Radio Frequency ("RF"), audio, or an optical signal to activiate the impact absorption device. The signal can be generated by a human operator or autonomously via a computing device. The computing device can be an onboard device that executes instructions for the UAV. Alternatively, the computing device can be a remote land-based device that sends remote instructions to the UAV from an operator. The computing device can also be present onboard a neighboring or remotely situated distinct UAV. The instructions can go to a particular location in 3D space. If the UAV 102 flies autonomously, the UAV system 100 may operate without the remote control 104.

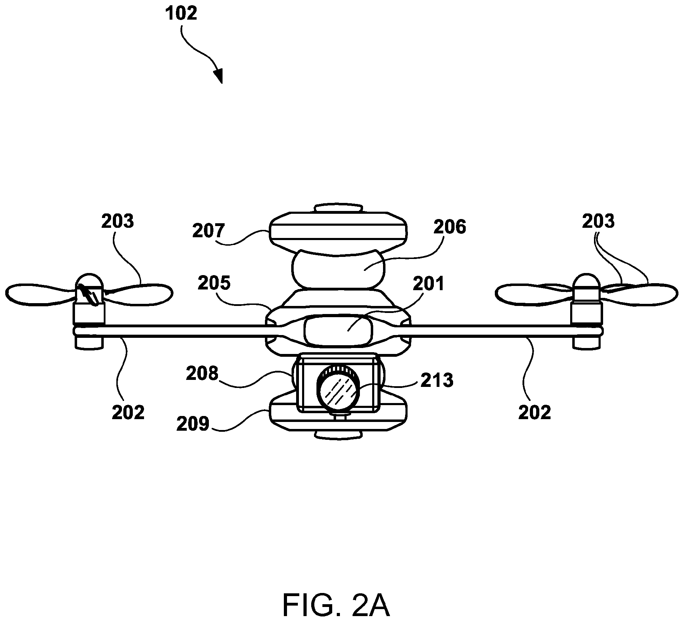

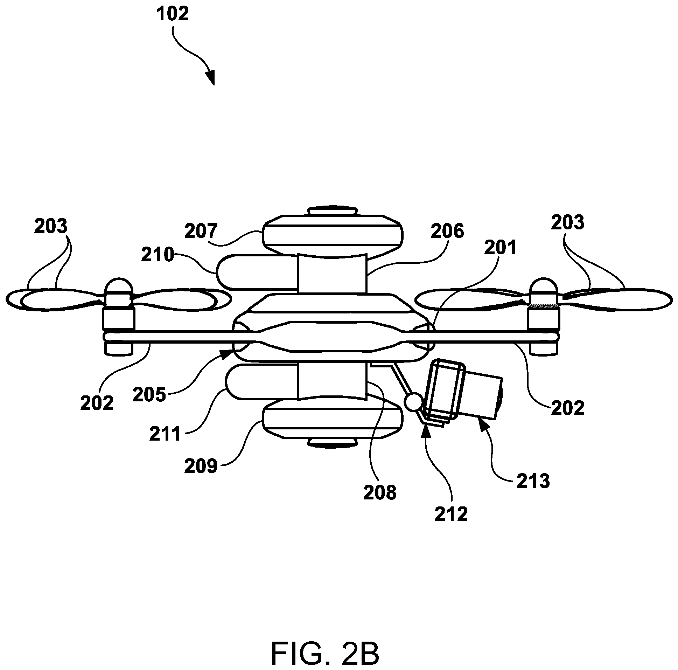

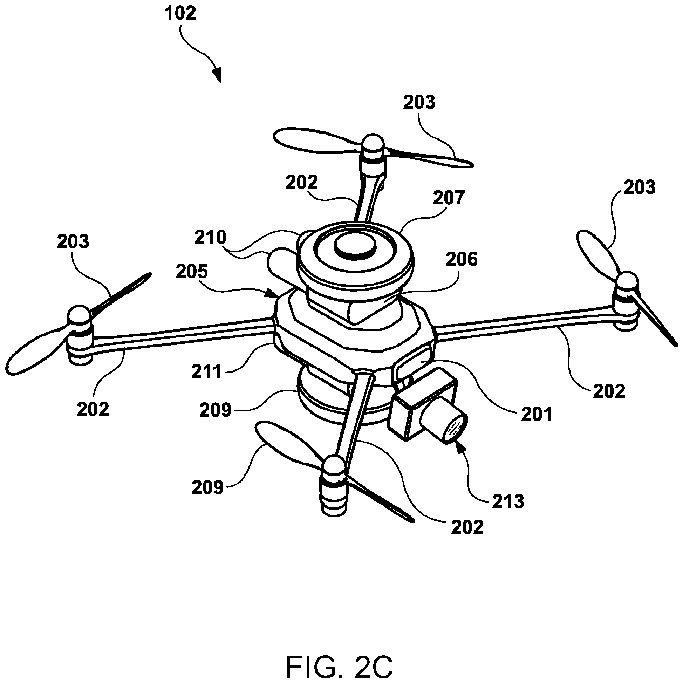

Figures 2A, 2B, and 2C illustrate a front view, a side view, and a perspective view of the components of the UAV apparatus 102 illustrated in Figure 1. The UAV apparatus 102 has a frame 205, a plurality of connectors 206 and 208, a plurality of storage devices 207 and 209, and a plurality of inflation devices 210 and 211. The connectors 206 and 208 can be platforms, chambers, arms, cages, or other types of mounting devices, that are used to connect the plurality of storage devices 207 and 209 to the frame 205. The first storage device 207 is operably attached to the first inflation device 210. Further, the second storage device 209 is operably attached to the second inflation device 211.

The inflation devices 210 and 211 can be canisters of a compressed gas such as carbon dioxide. The inflation devices 210 and 211 are used to inflate impact absorption devices such as an airbag stored in the first storage device 207 and an airbag stored in the second storage device 209. Although the inflation devices 210 and 211 are illustrated as being positioned within the connectors 206 and 208, e.g., chambers, the inflation devices 210 and 211 can be situated on the top or sides of the storage devices 207 and 209. Alternatively, the inflation devices 210 and 211 can be positioned on the connectors 206 and 208 in proximity to the first storage device 207 and the second storage device 209. In addition, the first inflation devices 210 and 211 can take the form of a variety of different shapes and sizes. The inflation devices 210 and 211 can also be integrated within the first storage device 207 and the second storage device 209.

The frame 205 also has the components of the UAV that are used to perform flight operation of the UAV. For instance, the frame 205 has a control device 201 that has the components for performing flight operation either autonomously or based upon an instruction received from the remote control 104. The control device 201 also has sensors for detecting a UAV malfunction or other event in which the airbag should be deployed and one or more electromechanical actuators, e.g., valves, for activating the impact absorption device.

The frame 205 also has a plurality of arms 202 that are each operably connected to a propulsion mechanism 203, e.g., a propeller mounted on a motor, where the motor is coupled to control device 201. Control device 201 varies the speed of each of the propulsion devices 203 so as to control altitude and travel direction of UAV 102. Other implementations may be operated with one propeller, e.g., a helicopter, or without any propellers, e.g., a balloon.

Further, a mounting device 212 may be used to mount various components to the frame 205. For example, an image capture device 213 may be mounted to the frame 205. The image capture device 213 may perform image capture during flight to allow a remotely positioned human pilot to navigate the UAV 102.

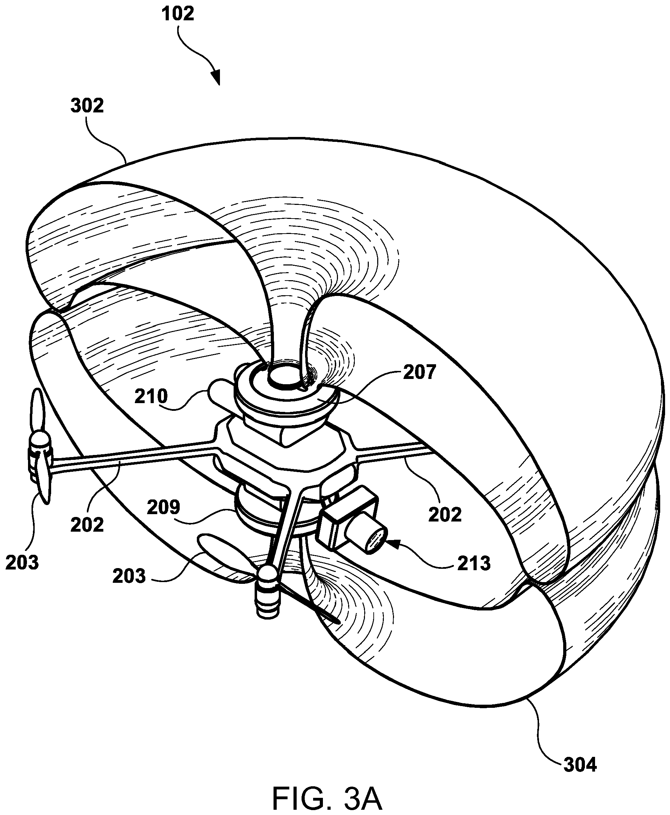

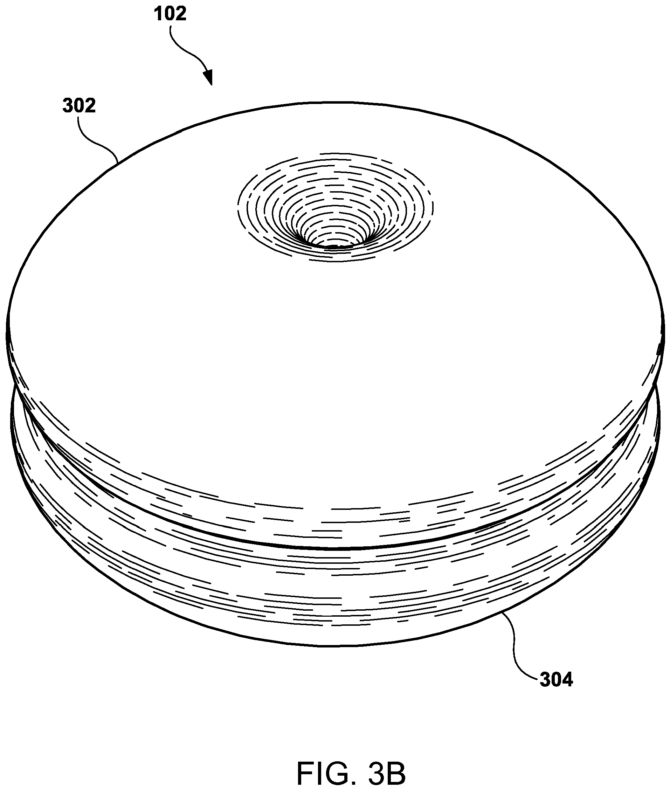

Figures 3A and 3B illustrate an example of the UAV apparatus 102 illustrated in Figures 2A, 2B, and 2C partially deploying and fully deploying a first airbag and a second airbag. The first airbag 302 is deployed from the first storage device 207 by the first inflation device 210 whereas the second airbag 304 is deployed from the second storage device 209 by the second inflation device 211. The first airbag 302 has dimensions such that the first airbag 302 covers the propellers 203 attached to the frame 205, the first storage device 207, and a significant portion of the electronic control device 201. Further, the second airbag 304 has dimensions such that the second airbag 304 covers the second storage device 209, the mounting device 212, the image capture device 213, and a significant portion of the electronic control device 201. The first airbag 302 and the second airbag 304 cover all of the propellers 203, electronic components, and any other components that are part of or are attached to the frame 205 that may present hard, sharp or spinning components during free fall or impact. The airbags 302 and 304 together form a balloon-like structure. As the balloon-like structure is inflated it has a solid shape that absorbs large forces associated with rapid deceleration of UAV 102 upon impact. The inflation can be performed at various speeds, e.g., instantaneously, slowly, etc.

Although two inflation devices 210 and 211 are illustrated, a single inflation device may be used to inflate multiple airbags such as airbags 302 and 304. For instance, a single inflation device, e.g., a valve, may be electromechanically operated by the electronic control device 201 to rotate to different storage devices 207 and 209 to inflate airbags 302 and 304.

Further, a single airbag may be used if a portion of the UAV 102 has a soft payload. For instance, a UAV 102 that has a bottom portion with a soft material may only need a single airbag to cover an upper portion having sharp and other components that pose safety hazards. In addition, more than two airbags may be used to cover a UAV apparatus 102. For example, a large UAV 102 may have many components that necessitate use of more than two airbags.

In one implementation, the airbags 302 and 304 are sealed. In other words, the airbags 302 and 304 do not release air upon impact unless there are punctures of the airbags 302 and 304. In another implementation, the airbags 302 and 304 have vents that release air from the airbags 302 and 304 upon impact. The release of air upon impact helps further reduce forces resulting from impact.

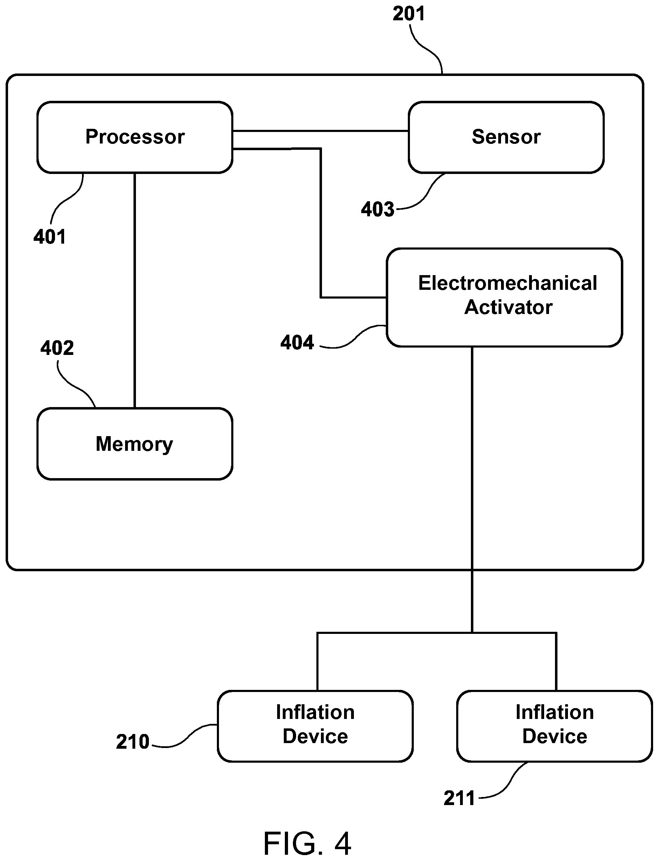

Figure 4 illustrates the internal components of the control device 201 illustrated in Figures 2A, 2B, and 2C. The electronic control device 201 comprises a processor 401, a memory 402, a sensor 403, and an activator 404. The sensor(s) 403, e.g., accelerometer, altimeter, gyroscope, etc., provides data, e.g., an activation signal, to the processor 401 so that the processor 401 can determine if the UAV apparatus 102 has malfunctioned or otherwise experienced an event that warrants deploying airbags.

A variety of different sensors 403 can be used to trigger an activation signal, which removes power from the propulsion devices, e.g., propellers 203 and/or activates the electromechanical activator 404. The sensors 403 can detect the malfunction based on simplified logic criteria, i.e., sense a flip, a broken propeller, bad battery, electronic health failure, communication failure, or software failure.

As an example, the sensor 403 is an accelerometer that provides acceleration data to the processor 401 for storage in the memory 402. Alternatively, the acceleration data can be stored in one or more registers of the processor 401. The processor 401 then determines that the UAV apparatus 102 is accelerating faster than a predetermined acceleration. The processor 401 then determines that airbags 302 and 304 illustrated in Figures 3A and 3B should be deployed. The processor 401 sends an activation signal to the electromechanical activator 404 instructing the electromechanical activator 404 to activate inflation devices 210 and 211. The inflation devices 210 and 211 then deploy airbags 302 and 304 from the first storage device 207 and the second storage device 209.

As another example, the sensor 403 is an altimeter that determines altitude data for the UAV apparatus 102. The processor 401 then determines that the UAV apparatus 102 is flying at an altitude that is less than a predetermined altitude. The processor 401 then determines that airbags 302 and 304 illustrated in Figures 3A and 3B should be deployed.

As yet another example, the sensor 403 is a gyroscope that determines pitch, roll, and/or yaw data. The gyroscope provides that data to the processor 401, which can determine if the UAV is performing any unexpected rotations. As an example, the gyroscope sends the processor 401 data that indicates that the UAV had a pitch and roll each greater than seventy degrees. The processor 401 determines that such a rotation is a flip that was unexpected.

As another example, the sensor 403 is a current sensing sensor that determines if a motor (not shown) is consuming current. If the sensor 403 determines that the motor is not consuming any current or is consuming an abnormally high amount of current, the sensor 403 provides that data to the processor 401, which may determine that a motor failure has occurred.

The sensor 403 may also be a component sensor, i.e., a sensor that determines that a component has malfunctioned. For instance, the sensor 403 may determine that a propeller 203 is not functioning properly. The sensor 403 sends the data to the processor 401 so that the processor 401 can determine if airbag deployment is necessary based upon whether or not the sensor data is within an acceptable threshold or range. The sensor 403 can also determine if a communication failure has occurred with a particular component.

The processor 404 is not necessary for operation of the sensor 403. For example, a component attached to the sensor 403 can be configured to operate only if the sensor 403 provides a signal having a value in a certain range. For instance, the inflation devices 210 and 211 illustrated in Figures 2A, 2B, and 2C may be operably attached to a sensor that detects if the motor is not consuming any current or is consuming an abnormally high amount of current. The inflation devices 210 and 211 are configured to be activated to inflate airbags if the sensor 403 does not provide any signal indicating current consumption or provides a signal of an abnormally high level of current.

## Claims

1. A unmanned aerial vehicle comprising:
a frame (205);
a propulsion mechanism (203) coupled to the frame that propels the frame through the air;
one or more airbags (302, 304) coupled to the frame; and
an inflation device (210, 211) coupled to the frame and to at least one of the one or more airbags, **characterized in that** the inflation device inflates the one or more airbags based upon receipt of an activation signal such that the one or more airbags engulf the frame and propulsion mechanism.

2. The unmanned aerial vehicle of claim 1, wherein the inflation device (210, 211) comprises a canister of carbon dioxide having an electromechanical activator.

3. The unmanned aerial vehicle of claim 1 or 2, wherein the one or more airbags (302, 304) have inflated dimensions such that the frame (205) and the propulsion mechanism (203) are engulfed after inflation of the one or more airbags.

4. The unmanned aerial vehicle of claim 1, 2 or 3, further comprising a sensor that detects a component malfunction and sends the activation signal to the inflation device (210, 211) upon the detection of the component malfunction.

5. An unmanned aerial vehicle according to any preceding claim, further comprising a processor that receives a malfunction signal from the sensor and sends the activation signal to the inflation device (210, 211) to deploy the one or more airbags (302, 304) prior to an impact of the unmanned aerial vehicle with an object.

6. The unmanned aerial vehicle of any preceding claim, further comprising an altimeter producing an altitude signal; and
a processor coupled to receive the altitude signal, the processor executing code configured to determine whether the frame (205) experiences a change in altitude, the processor sending the activation signal to the inflation device (210, 211) upon the processor determining that the frame is flying outside of a predetermined altitude range.

7. The unmanned aerial vehicle of any preceding claim, further comprising an accelerometer producing an acceleration signal or loss of signal; and
a processor coupled to receive the acceleration signal, the processor executing code configured to determine whether the frame (205) experiences a change in acceleration , the processor sending the activation signal to the inflation device (210, 211) upon the processor determining that the frame is accelerating at an acceleration in excess of a predetermined acceleration.

8. The unmanned aerial vehicle of any preceding claim, further comprising a receiver that receives an instruction from a pilot remotely positioned from the unmanned aerial vehicle and sends the activation signal to the inflation device (210, 211) based upon the instruction.

9. The unmanned aerial vehicle of any preceding claim, wherein the one or more airbags (302, 304) are positioned above and below a center of gravity of the frame (205) along the vertical centerline of the frame.

10. The unmanned aerial vehicle of any preceding claim, wherein the one or more airbags (302, 304) are sealed that prevent air from the one or more airbags to be dissipated upon the impact; and/or
wherein the one or more airbags have one or more vents that allow air from the one or more airbags to be dissipated upon the impact.

11. A method comprising:
propelling an unmanned aerial vehicle through the air, the unmanned aerial vehicle having one or more airbags (302, 304); and
sending an activation signal to an inflation device (210, 211) that inflates the one or more airbags based upon receipt of the activation signal to deploy the one or more airbags from the storage device prior to an impact of the unmanned aerial vehicle with an object; **characterized in that** the one or more airbags engulf a frame (205) and propulsion mechanism (203) of the unmanned aerial vehicle.

12. The method of claim 11, further comprising detecting a condition of a component and sending the activation signal to the inflation device (210, 211) upon the detection of the condition of the component; and/or
further comprising:
determining if the unmanned aerial vehicle experiences a change in altitude; and
sending the activation signal to the inflation device upon determining that the unmanned aerial vehicle is flying beneath a predetermined altitude; and/or
further comprising:
determining if the frame (205) experiences a change in acceleration; and
sending the activation signal to the inflation device (210, 211) upon determining that the unmanned aerial vehicle is accelerating at an acceleration in excess of a predetermined acceleration.

13. The method of any one of claims 11 or 12, further comprising:
receiving an instruction from a pilot remotely positioned from the unmanned aerial vehicle apparatus; and
sending the activation signal to the inflation device (210, 211) based upon the instruction.

## Patentansprüche

1. Unbemanntes Luftfahrzeug, das Folgendes umfasst:
einen Rahmen (205);
einen Antriebsmechanismus (203), gekoppelt mit dem Rahmen, der den Rahmen durch die Luft antreibt;
einen oder mehrere Airbags (302, 304), gekoppelt mit dem Rahmen; und
eine Aufblasvorrichtung (210, 211), gekoppelt mit dem Rahmen und mit mindestens einem von dem einen oder den mehreren Airbags, **dadurch gekennzeichnet, dass** die Aufblasvorrichtung den einen oder die mehreren Airbags bei Empfang eines Aktivierungssignals aufbläst, sodass der eine oder die mehreren Airbags den Rahmen und den Antriebsmechanismus einhüllen.

2. Unbemanntes Luftfahrzeug nach Anspruch 1, wobei die Aufblasvorrichtung (210, 211) einen Kanister von Kohlendioxid umfasst, der einen elektromechanischen Aktivator aufweist.

3. Unbemanntes Luftfahrzeug nach Anspruch 1 oder 2, wobei der eine oder die mehreren Airbags (302, 304) aufgeblasen solche Abmessungen aufweisen, dass der Rahmen (205) und der Antriebsmechanismus (203) nach dem Aufblasen des einen oder die mehreren Airbags eingehüllt werden.

4. Unbemanntes Luftfahrzeug nach Anspruch 1, 2 oder 3, das ferner einen Sensor umfasst, der eine Komponentenfehlfunktion erkennt und bei dem Erkennen einer Komponentenfehlfunktion das Aktivierungssignal an die Aufblasvorrichtung (210, 211) sendet.

5. Unbemanntes Luftfahrzeug nach einem der vorangehenden Ansprüche, das ferner einen Prozessor umfasst, der ein Fehlfunktionssignal von dem Sensor empfängt und an die Aufblasvorrichtung (210, 211) das Aktivierungssignal sendet, um den einen oder die mehreren Airbags (302, 304) vor einem Zusammenstoß des unbemannten Luftfahrzeugs mit einem Objekt auszulösen.

6. Unbemanntes Luftfahrzeug nach einem der vorangehenden Ansprüche, das ferner einen Höhenmesser umfasst, der ein Höhensignal produziert; und
einen Prozessor, der angekoppelt ist, um das Höhensignal zu empfangen, wobei der Prozessor Code ausführt, der dazu ausgelegt ist, festzustellen, ob der Rahmen (205) eine Veränderung in der Höhe erfährt, wobei der Prozessor das Aktivierungssignal an die Aufblasvorrichtung (210, 211) sendet, wenn der Prozessor feststellt, dass der Rahmen außerhalb eines vorbestimmten Höhenbereichs fliegt.

7. Unbemanntes Luftfahrzeug nach einem der vorangehenden Ansprüche, ferner umfassend einen Beschleunigungsmesser, der ein Beschleunigungssignal oder Verlust von Signal produziert; und
einen Prozessor, der angekoppelt ist, um das Beschleunigungssignal zu empfangen, wobei der Prozessor Code ausführt, der dazu ausgelegt ist, festzustellen, ob der Rahmen (205) eine Veränderung in der Beschleunigung erfährt, wobei der Prozessor das Aktivierungssignal an die Aufblasvorrichtung (210, 211) sendet, wenn der Prozessor feststellt, dass der Rahmen mit einer Beschleunigung beschleunigt, die höher als eine vorbestimmte Beschleunigung ist.

8. Unbemanntes Luftfahrzeug nach einem der vorangehenden Ansprüche, das ferner einen Empfänger umfasst, der eine Anweisung von einem entfernt von dem unbemannten Luftfahrzeug positionierten Piloten empfängt und auf der Grundlage der Anweisung das Aktivierungssignal an die Aufblasvorrichtung (210, 211) sendet.

9. Unbemanntes Luftfahrzeug nach einem der vorangehenden Ansprüche, wobei der eine oder die mehreren Airbags (302, 304) oberhalb und unterhalb eines Schwerpunkts des Rahmens (205) entlang der vertikalen Mittellinie des Rahmens positioniert sind.

10. Unbemanntes Luftfahrzeug nach einem der vorangehenden Ansprüche, wobei der eine oder die mehreren Airbags (302, 304) abgedichtet sind, um zu verhindern, dass bei dem Zusammenstoß Luft von dem einen oder den mehreren Airbags abgeführt wird, und/oder
wobei der eine oder die mehreren Airbags eine oder mehrere Entlüftungen aufweisen, die gestatten, dass bei dem Zusammenstoß Luft von dem einen oder den mehreren Airbags abgeführt wird.

11. Verfahren, das Folgendes umfasst:
Antreiben eines unbemannten Luftfahrzeugs durch die Luft, wobei das unbemannte Luftfahrzeug einen oder mehrere Airbags (302, 304) aufweist; und
Senden eines Aktivierungssignals an eine Aufblasvorrichtung (210, 211), die den einen oder die mehreren Airbags auf der Grundlage des Empfangs des Aktivierungssignals zum Auslösen des einen oder der mehreren Airbags von der Speichervorrichtung vor einem Zusammenstoß des unbemannten Luftfahrzeugs mit einem Objekt aufbläst; **dadurch gekennzeichnet, dass** der eine oder die mehreren Airbags einen Rahmen (205) und einen Antriebsmechanismus (203) des unbemannten Luftfahrzeugs einhüllen.

12. Verfahren nach Anspruch 11, ferner umfassend das Erkennen einer Bedingung einer Komponente und Senden des Aktivierungssignals an die Aufblasvorrichtung (210, 211) bei Erkennen der Bedingung der Komponente; und/oder
ferner umfassend:
Bestimmen, ob das unbemannte Luftfahrzeug eine Veränderung in der Höhe erfährt; und
Senden des Aktivierungssignals an die Aufblasvorrichtung bei Feststellen, dass das unbemannte Luftfahrzeug unterhalb einer vorbestimmten Höhe fliegt; und/oder
ferner umfassend:
Feststellen, ob der Rahmen (205) eine Veränderung in der Beschleunigung erfährt; und
Senden des Aktivierungssignals an die Aufblasvorrichtung (210, 211) bei Feststellen, dass das unbemannte Luftfahrzeug mit einer Beschleunigung über einer vorbestimmten Beschleunigung beschleunigt.

13. Verfahren nach einem der Ansprüche 11 oder 12, das ferner Folgendes umfasst:
Empfangen einer Anweisung von einem entfernt von der unbemannten Luftfahrzeugvorrichtung positionierten Piloten; und
Senden des Aktivierungssignals an die Aufblasvorrichtung (210, 211) auf der Grundlage der Anweisung.

## Revendications

1. Véhicule aérien sans pilote comprenant :
un châssis (205) ;
un mécanisme de propulsion (203) accouplé au châssis qui propulse le châssis dans l'air ;
au moins un coussin gonflable (302, 304) accouplé au châssis ; et
un dispositif de gonflage (210, 211) accouplé au châssis et à au moins l'un de l'au moins un coussin gonflable, **caractérisé en ce que** le dispositif de gonflage gonfle l'au moins un coussin gonflable en fonction de la réception d'un signal d'activation de sorte que l'au moins un coussin gonflable enveloppe le châssis et le mécanisme de propulsion.

2. Véhicule aérien sans pilote selon la revendication 1, le dispositif de gonflage (210, 211) comprenant un réservoir de dioxyde de carbone ayant un activateur électromécanique.

3. Véhicule aérien sans pilote selon la revendication 1 ou 2, l'au moins un coussin gonflable (302, 304) ayant des dimensions gonflées telles que le châssis (205) et le mécanisme de propulsion (203) sont enveloppés après le gonflage de l'au moins un coussin gonflable.

4. Véhicule aérien sans pilote selon la revendication 1, 2 ou 3, comprenant en outre un capteur qui détecte un dysfonctionnement de composant et envoie le signal d'activation au dispositif de gonflage (210, 211) lors de la détection du dysfonctionnement de composant.

5. Véhicule aérien sans pilote selon l'une quelconque des revendications précédentes, comprenant en outre un processeur qui reçoit un signal de dysfonctionnement du capteur et envoie le signal d'activation au dispositif de gonflage (210, 211) pour déployer l'au moins un coussin gonflable (302, 304) avant un impact du véhicule aérien sans pilote avec un objet.

6. Véhicule aérien sans pilote selon l'une quelconque des revendications précédentes, comprenant en outre un altimètre produisant un signal d'altitude ; et
un processeur accouplé pour recevoir le signal d'altitude, le processeur exécutant un code conçu pour déterminer si le châssis (205) subit un changement d'altitude, le processeur envoyant le signal d'activation au dispositif de gonflage (210, 211) lorsque le processeur détermine que le châssis vole hors d'une plage d'altitude prédéfinie.

7. Véhicule aérien sans pilote selon l'une quelconque des revendications précédentes, comprenant en outre un accéléromètre produisant un signal d'accélération ou une perte de signal ; et
un processeur accouplé pour recevoir le signal d'accélération, le processeur exécutant un code conçu pour déterminer si le châssis (205) subit un changement d'accélération, le processeur envoyant le signal d'activation au dispositif de gonflage (210, 211) lorsque le processeur détermine que le châssis accélère à une accélération dépassant une accélération prédéfinie.

8. Véhicule aérien sans pilote selon l'une quelconque des revendications précédentes, comprenant en outre un récepteur qui reçoit une instruction d'un pilote positionné à distance du véhicule aérien sans pilote et envoie le signal d'activation au dispositif de gonflage (210, 211) en fonction de cette instruction.

9. Véhicule aérien sans pilote selon l'une quelconque des revendications précédentes, l'au moins un coussin gonflable (302, 304) étant positionné au-dessus et en dessous d'un centre de gravité du châssis (205) le long de l'axe vertical du châssis.

10. Véhicule aérien sans pilote selon l'une quelconque des revendications précédentes, l'au moins un coussin gonflable (302, 304) étant scellé de sorte à empêcher l'air provenant de l'au moins un coussin gonflable d'être dissipé lors de l'impact ; et/ou
l'au moins un coussin gonflable ayant au moins un évent qui permet à l'air provenant de l'au moins un coussin gonflable d'être dissipé lors de l'impact.

11. Procédé comprenant les étapes consistant à :
propulser un véhicule aérien sans pilote dans l'air, le véhicule aérien sans pilote ayant au moins un coussin gonflable (302, 304) ; et
envoyer un signal d'activation à un dispositif de gonflage (210, 211) qui gonfle l'au moins un coussin gonflable en fonction de la réception du signal d'activation pour déployer l'au moins un coussin gonflable du dispositif de stockage avant un impact du véhicule aérien sans pilote avec un objet ; **caractérisé en ce que** l'au moins un coussin gonflable enveloppe un châssis (205) et un mécanisme de propulsion (203) du véhicule aérien sans pilote.

12. Procédé selon la revendication 11, comprenant en outre les étapes consistant à détecter un état d'un composant et à envoyer le signal d'activation au dispositif de gonflage (210, 211) lors de la détection de l'état du composant ; et/ou
comprenant en outre les étapes consistant à :
déterminer si le véhicule aérien sans pilote subit un changement d'altitude ; et
envoyer le signal d'activation au dispositif de gonflage lorsqu'il détermine que le véhicule aérien sans pilote vole en dessous d'une altitude prédéfinie ; et/ou
comprenant en outre les étapes consistant à :
déterminer si le châssis (205) subit un changement d'accélération ; et
envoyer le signal d'activation au dispositif de gonflage (210, 211) après avoir déterminé que le véhicule aérien sans pilote accélère à une accélération supérieure à une accélération prédéfinie.

13. Procédé selon la revendication 11 ou 12, comprenant en outre les étapes consistant à :
recevoir une instruction d'un pilote positionné à distance de l'appareil de véhicule aérien sans pilote ; et
envoyer le signal d'activation au dispositif de gonflage (210, 211) en fonction de l'instruction.
